# EUROPÄISCHE PATENTANMELDUNG

(11) **EP 2 667 157 A1**
(43) Veröffentlichungstag der Anmeldung: **27.11.2013**
(21) Anmeldenummer: 12168709.9
(22) Anmeldetag: 21.05.2012
(51) Int. Cl.: G01D 5/38, G01D 5/244

(54) **Messwertgeber zum Erhalt einer Positionsinformation, Verfahren zum Betrieb eines solchen Messwertgebers und Verwendung eines solchen Messwertgebers zur Überwachung eines Motors**

(71) Anmelder: Siemens Aktiengesellschaft, 80333 München (DE)
(72) Erfinder: Eckert, Rainer, 97616 Bad Neustadt / Herschfeld (DE); Nolting, Christoph, 91315 Höchstadt/Aisch (DE)

(57) **Zusammenfassung**

Die Erfindung betrifft einen Messwertgeber (16) zum Erhalt einer Positionsinformation, wobei mit einer Sende- /Empfangseinheit (18) eine Maßverkörperung (20) abgetastet wird, wobei die Maßverkörperung (20) auf einem rotatorisch beweglichen Träger (22) aufgebrachte diffraktiv wirkende mikrostrukturierte Felder umfasst, wobei die Maßverkörperung (20) mikrostrukturierte Felder in Form von computergenerierten Hologrammen (24) umfasst und wobei die computergenerierten Hologramme (24) auch Informationen in Bezug auf eine radiale Position umfassen.

## Beschreibung

Die Erfindung betrifft einen Messwertgeber zum Erhalt einer Positionsinformation. Als Positionsinformation werden dabei absolute und/oder inkrementelle Positionsinformationen verstanden. Solche Messwertgeber sind an sich bekannt. Exemplarisch kann auf sogenannte Inkrementalgeber verwiesen werden.

Der hier zu beschreibende Messwertgeber basiert auf einer optischen Abtastung einer Maßverkörperung. Dies ist zum Beispiel bei Inkrementalgebern ebenfalls bekannt.

Die EP 1 677 081 B schlägt die Verwendung einer diffraktiv wirkenden Maßverkörperung für einen Messwertgeber auf der Basis computergenerierter Hologramme (CGH) zum Erhalt einer absoluten Positionsinformation vor.

Motoren, die eine rotierende Motorwelle antreiben und die für anspruchsvolle Aufgaben bestimmt sind, haben üblicherweise als Messwertgeber einen hochauflösenden Winkelgeber, der mit der Motorwelle verbunden ist und einer übergeordneten Steuerung Informationen über eine Winkellage/Winkelposition der Motorwelle liefert. Derartige Winkelgeber messen ausschließlich den Winkel ϕ (entweder innerhalb einer Umdrehung der Motorwelle oder über mehrere Umdrehungen). Hierbei verfügt der Winkelgeber über eine kreisförmige Maßverkörperung, die zum Beispiel optoelektronisch abgetastet wird. Eine solche Maßverkörperung eines herkömmlichen Winkelgebers weist keine Unterschiede in radialer Richtung auf. Zur exakten Bestimmung der Winkellage der Motorwelle ist es erforderlich, dass der Mittelpunkt der Maßverkörperung exakt mit der Drehachse der Motorwelle übereinstimmt, da sich ansonsten ein sogenannter Exzentrizitätsfehler bei der Winkelmessung ergibt. Dies erfordert eine aufwendige Justierung.

Eine Aufgabe der Erfindung besteht darin, eine weitere Ausführungsform eines Messwertgebers, insbesondere eines Messwertgebers, der zumindest Informationen hinsichtlich einer radialen Position liefert, sowie ein Verfahren zum Betrieb eines solchen Messwertgebers anzugeben.

Diese Aufgabe wird hinsichtlich des Messwertgebers erfindungsgemäß mit den Merkmalen des Anspruchs 1 gelöst. Dazu ist bei einem Messwertgeber, der zum Erhalt einer Positionsinformation eine Sende-/Empfangseinheit umfasst, mit der eine Maßverkörperung abtastbar ist oder abgetastet wird, vorgesehen, dass die Maßverkörperung mikrostrukturierte Felder in Form von computergenerierten Hologrammen umfasst und dass die computergenerierten Hologramme auch Informationen in Bezug auf eine radiale Position umfassen. Die Maßverkörperung ist auf einem beweglichen Träger, insbesondere einem drehbar beweglichen Träger, aufgebraucht und umfasst die auf dem Träger aufgebrachten und diffraktiv wirkenden mikrostrukturierte Felder, hier also die computergenerierten Hologramme.

Bei dem beweglichen Träger handelt es sich üblicherweise um einen rotatorisch beweglichen Träger. Grundsätzlich kommt die Verwendung des hier und im Folgenden beschriebenen Ansatzes auch bei Lineargebern in Betracht. Dann umfassen die computergenerierten Hologramme keine Informationen in Bezug auf eine radiale Position sondern in Bezug auf eine weitere Dimension. Wenn also bei Drehgebern die computergenerierten Hologramme zum Beispiel Informationen in Bezug auf eine Winkellage und in Bezug auf eine radiale Position umfassen, umfassen diese bei Lineargebern zum Beispiel Lageinformationen entlang einer ersten Raumachse (z.B. x-Achse) und Lageinformationen entlang einer zweiten Raumachse. Die weitere Beschreibung wird ohne Verzicht auf eine weitergehende Allgemeingültigkeit am Beispiel von Drehgebern fortgesetzt. Für eine Anwendung des Ansatzes bei Lineargebern muss dann entsprechend jede Bezugnahme auf eine "radiale Information" als "Information in Bezug auf eine weitere Dimension" und entsprechend eine rotatorische Beweglichkeit des Trägers als linear Beweglichkeit des Trägers gelesen werden. Eine solche Information in Bezug auf eine weitere Dimension, üblicherweise eine Information in Bezug auf eine Dimension quer zur linearen Bewegungsrichtung des Trägers, würde sich bei Belastungen der Lager (z.B. Linearlager) des Motors (z.B. Linearmotors) ändern. Durch Auswertung einer solchen Positionsinformation lässt sich eine mehr oder weniger gute Ausrichtung des Motors qualifiziert beurteilen oder es lassen sich eventuelle Lagerschäden erkennen oder vorhersagen.

Dass die computergenerierten Hologramme auch Informationen in Bezug auf eine radiale Position, nämlich eine radiale Position des jeweiligen computergenerierten Hologramms, umfassen, ist dabei so zu verstehen, dass die computergenerierten Hologramme einen Code umfassen, der eine solche radiale Position kodiert. Dass die computergenerierten Hologramme Informationen in Bezug auf eine radiale Position umfassen, ist gleichwohl nicht so zu verstehen, dass jedes computergenerierte Hologramm der Maßverkörperung einerseits Informationen in Bezug auf eine radiale Position und andererseits zumindest eine weitere Positionsinformation umfasst, obwohl dies bei einer besonderen Ausführungsform des Messwertgebers vorgesehen sein kann. Gemeint ist, dass von den als Maßverkörperung fungierenden computergenerierten Hologrammen zumindest einige computergenerierte Hologramme Informationen in Bezug auf eine radiale Position des jeweiligen computergenerierten Hologramms und andererseits zumindest eine weitere Positionsinformation umfassen. Jedes dieser computergenerierten Hologramme kodiert dabei beide Positionsinformationen, nämlich die Information hinsichtlich der radialen Position und zum Beispiel eine Winkellage.

Der Vorteil der Erfindung besteht darin, dass mit der Verwendung computergenerierter Hologramme Positionsinformationen besonders leicht und effizient kodierbar sind und dass der Informationsumfang, den ein computergeneriertes Hologramm kodiert, ohne Qualitätseinbußen erweiterbar ist. Damit kann eine auf computergenerierten Hologrammen basierende Maßverkörperung relativ einfach so ausgeführt werden, dass auch eine radiale Position kodiert wird. Hinsichtlich der Abtastung solcher computergenerierter Hologramme ist ein Detektor ausreichend, der zumindest ein linienförmiges und aufgrund der Abtastung des jeweiligen computergenerierten Hologramms resultierendes Bild erfassen kann. Ein solcher Sensor, zum Beispiel in Form einer CCD-Zeile, ist üblicherweise bei Messwertgebern, bei denen die Ableitung einer Positionsinformation auf der Abtastung computergenerierter Hologramme basiert, ohnehin erforderlich und im Einzelfall kommen sogar Sensoren in Form einer CCD-Matrix zur Anwendung. Damit ist die Erfassung einer Information hinsichtlich einer radialen Position ohne zusätzlichen konstruktiven Aufwand auf Seiten des Messwertgebers möglich. Es ist damit ausreichend, einen Träger mit einer Maßverkörperung mit entsprechenden computergenerierten Hologrammen vorzusehen und eine Anpassung der Verarbeitung der Bilder der Beugungsmuster, die sich bei der Abtastung der computergenerierten Hologramme ergeben, vorzunehmen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer oben schon erwähnten Ausführungsform des Messwertgebers ist vorgesehen, dass jedes computergenerierte Hologramm einerseits Informationen in Bezug auf eine radiale Position und andererseits zumindest eine weitere Positionsinformation umfasst. Dann liefert jede Abtastung jedes computergenerierten Hologramms nicht nur die normalerweise im Vordergrund stehende weitere Positionsinformation, also zum Beispiel eine Information hinsichtlich der Winkellage des jeweiligen Trägers der Maßverkörperung, sondern auch die Information hinsichtlich der radialen Position. Etwaige Änderungen der radialen Position können so besonders genau und im Wesentlichen lückenlos erfasst werden.

Bei einer besonderen Ausführungsform des Messwertgebers ist vorgesehen, dass die von diesem abtastbare oder abgetastete Maßverkörperung auf dem jeweiligen Träger die computergenerierten Hologramme in konzentrischen, kreisförmigen Spuren umfasst. Grundsätzlich können die computergenerierten Hologramme in beliebigen Positionen auf dem Träger angeordnet sein. Wenn die computergenerierten Hologramme in konzentrischen, kreisförmigen Spuren angeordnet sind, ergibt sich bei einer ausreichend exakt positionierten Maßverkörperung und bei einem ebenen und auch ansonsten nicht verzerrten Träger sowie bei einer exakt ausgerichteten Drehachse des Trägers und einem in Bezug auf die Drehachse exakt ausgerichteten Träger bei Vollumdrehungen des Trägers stets die gleiche radiale Positionsinformation. Weil die computergenerierten Hologramme selbst eine gewisse Fläche auf dem Träger einnehmen, ergibt sich eine solche stets gleiche radiale Positionsinformation normalerweise auch dann noch, wenn keine exakte, aber zumindest eine ausreichend exakte Positionierung / Justierung von Träger, Maßverkörperung und Messwertgeber vorliegt. Bei einer solchen, während einer Vollumdrehung des Trägers stets gleich bleibenden Information hinsichtlich der radialen Position kann jede Abweichung als Ausnahmesituation ausgewertet werden. Es reicht demnach aus, zum Beispiel einen Startwert hinsichtlich der radialen Position oder die letzten zwei, zehn, fünfzig, usw. Informationen hinsichtlich der radialen Position zu erfassen, um daraus einen Vergleichswert zu bilden, mit dem eine jeweils aktuelle Information hinsichtlich der radialen Position verglichen werden kann. Wenn die computergenerierten Hologramme demgegenüber nicht in konzentrischen Spuren, sondern zum Beispiel zufällig verteilt auf der Oberfläche des Trägers oder in einem bestimmten Abschnitt der Oberfläche des Trägers angeordnet sind, kodieren auch nahe beieinander liegende und während einer Drehung des Trägers von dem Messwertgeber abgetastete computergenerierte Hologramme wegen ihrer eigenen, nicht vernachlässigbaren flächigen Ausdehnung nicht notwendig die gleiche radiale Position. Dies kann kompensiert werden, indem bei einer derartigen Anordnung der computergenerierten Hologramme jedes auch noch eine Information hinsichtlich der Position des Zentrums des computergenerierten Hologramms in zum Beispiel kartesischen Koordinaten kodiert. Dann kann bei einem zum Beispiel eher in einem Randbereich erfassten computergenerierten Hologramm die Tatsache der Erfassung nur des Randbereichs erkannt und eine mathematische Kompensation der jeweils aufgenommen Information hinsichtlich der radialen Position vorgenommen werden. Dies ist jedoch vergleichsweise aufwendig, so dass eine Anordnung der computergenerierten Hologramme auf einer Kreisbahn und in konzentrischen Spuren günstig ist.

Bei einem Verfahren zum Betrieb eines Messwertgebers wie hier und im Folgenden beschrieben wird durch Abtastung der Maßverkörperung zumindest die vom jeweiligen computergenerierten Hologramm umfasste Information hinsichtlich der radialen Position ausgelesen und ausgewertet. Normalerweise umfassen als Maßverkörperung fungierende computergenerierte Hologramme Informationen hinsichtlich einer absoluten Position des jeweiligen Hologramms innerhalb der Maßverkörperung, also zum Beispiel eine Information hinsichtlich der Winkellage. Insofern ist es üblich, die computergenerierten Hologramme zum Erhalt einer solchen absoluten Positionsinformation abzutasten und auf dieser Basis eine Winkellage einer Motorwelle oder dergleichen abzuleiten. Bei dem oben skizzierten Verfahren erfolgt eine Abtastung der Maßverkörperung zumindest in Bezug auf die von den dabei erfassten computergenerierten Hologrammen auch umfasste Information hinsichtlich der radialen Position, um zum Beispiel eine eventuelle Exzentrizität des Trägers oder der Maßverkörperung zu erkennen. Wenn die jeweils erfassten computergenerierten Hologramme weitere Positionsinformationen, also zum Beispiel eine Winkellage, kodieren, können gleichzeitig zwei oder mehr Positionsinformationen erfasst werden. Dementsprechend können also zum Beispiel gleichzeitig eine Winkellage und eine radiale Position ermittelt werden, um daraus einerseits eine Position, eine Geschwindigkeit oder eine Beschleunigung des Motors und andererseits eine Information hinsichtlich einer eventuellen Exzentrizität abzuleiten.

Bei einer besonderen Ausführungsform eines Verfahrens zum Betrieb eines Motors mit einem Messwertgeber wie hier und nachfolgend beschrieben, bei dem der rotatorisch bewegliche Träger der Maßverkörperung mit einer Welle des jeweiligen Motors bewegt wird, wird durch Abtastung der Maßverkörperung zumindest die vom jeweiligen computergenerierten Hologramm umfasste Information hinsichtlich der radialen Position ausgewertet und gleichzeitig oder anschließend werden die erhaltenen Informationen in Bezug auf die radiale Position zur Erkennung einer Exzentrizität der Motorwelle und/oder zur Erkennung von auf die Motorwelle wirkenden Querkräften ausgewertet. Als Bewegung des Trägers mit der Welle des jeweiligen Motors ist dabei jede durch die Motorwelle unmittelbar oder mittelbar bewirkte Bewegung des Trägers zu verstehen, wobei der Träger zum Beispiel an der Motorachse angebracht sein kann, so dass eine unmittelbare Bewegung des Trägers aufgrund einer Bewegung der Motorachse gegeben ist. Speziell wenn der Träger unmittelbar an der Motorachse angebracht ist, aber auch wenn der Träger aufgrund einer kinematischen Kopplung mit der Motorwelle durch diese bewegt wird, beeinflusst eine eventuelle Exzentrizität der Motorwelle und beeinflussen auf die Motorwelle wirkende Querkräfte eine Position und/oder Orientierung des Trägers. Bei einem ortsfesten Messwertgeber ist jede Änderung der Relativposition des Trägers und der davon umfassten Maßverkörperung zum Messwertgeber und dessen Sende- und Empfangseinheit an einer Änderung der hinsichtlich der radialen Position erhaltenen Informationen beim Abtasten der Maßverkörperung erkennbar. Die Informationen hinsichtlich der radialen Position sind also zur Erkennung einer solchen eventuellen Exzentrizität oder solcher eventueller Querkräfte auswertbar. Ein Betrag einer Änderung der hinsichtlich der radialen Position jeweils ermittelten Informationen ist dabei proportional zu einer Exzentrizität der Motorwelle oder den jeweils auf die Motorwelle wirkenden Querkräften. Damit lässt sich auch eine einfache Überwachung in Bezug auf eine zu gro-βe Exzentrizität und/oder zu große Querkräfte realisieren, indem der Betrag einer solchen Änderung in Bezug auf eine Überschreitung eines vorgegebenen oder vorgebbaren Schwellwerts überwacht wird. Bei einer Überschreitung eines solchen Schwellwerts ist eine Ausnahmesituation erkannt, die zum Beispiel ein automatisches Abschalten des Motors oder einen Betrieb des Motors bei einer reduzierten Drehzahl oder die Aktivierung eines optischen oder akustischen Anzeigeelements zur Information eines Benutzers über die Ausnahmesituation bewirken kann.

Bei einer Ergänzung des oben skizzierten Verfahrens zum Betrieb eines Motors mit einem Messwertgeber wie hier und nachfolgend beschrieben, bei dem der rotatorisch bewegliche Träger der Maßverkörperung mit einer Welle des jeweiligen Motors bewegt wird, wird durch Abtastung der Maßverkörperung zumindest die vom jeweiligen computergenerierten Hologramm umfasste Information hinsichtlich der radialen Position ausgewertet und gleichzeitig oder anschließend werden die erhaltenen Informationen in Bezug auf die radiale Position zur Erkennung einer Exzentrizität der Motorwelle und/oder zur Erkennung von auf die Motorwelle wirkenden Querkräften ausgewertet und protokolliert. Durch die Protokollierung kann eine eventuelle zeitliche Änderung einer Exzentrizität oder solcher Querkräfte erfasst werden. Zudem kann anhand einer solchen Protokollierung unter Umständen zwischen einer aus einem eventuellen Verschleiß der Motorlager herrührenden Exzentrizität der Motorwelle und eventuellen, auf die Motorwelle wirkenden Querkräften unterschieden werden, denn bei einem Verschleiß oder einem beginnenden Verschleiß der Motorlager besteht die Erwartung, dass die Exzentrizität dauerhaft oder im Wesentlichen dauerhaft, zumindest über komplette Vollumdrehungen vorliegt, während Querkräfte eher momentan und üblicherweise nur bei speziellen Winkellagen und damit nicht über komplette Vollumdrehungen vorliegen.

Wenn eine aktuelle Protokollierung der Informationen in Bezug auf die radiale Position mit einer vorangehenden Protokollierung der Informationen in Bezug auf die radiale Position verglichen wird, lässt sich nicht nur eine momentane Änderung einer eventuellen Exzentrizität oder eventueller Querkräfte erfassen, sondern es ist zum Beispiel auch ein Vergleich mit einem Betrieb des Motors ohne Last oder einem Betriebsverhalten des Motors unmittelbar nach dessen Inbetriebnahme oder am Ende einer Einlaufphase möglich. Auf diese Weise lässt sich unter dem Gesichtspunkt eines Vergleichs eines durch die Protokollierung gewonnenen Maßes für eine anfängliche Exzentrizität und einem entsprechenden Maß für eine momentane Exzentrizität ein eventueller Lagerverschleiß erkennen und darauf basierend eine Ausfallwahrscheinlichkeit des Motors aufgrund von Lagerverschleiß abschätzen oder eine Restlaufdauer vorhersagen. Speziell im Hinblick auf den Aspekt einer Vorhersage ist bei einer besonderen Ausführungsform vorhergesehen, dass eine Protokollierung wie oben skizziert regelmäßig, insbesondere zu äquidistanten Zeitpunkten, erfolgt, so dass anhand einer Interpolation des damit gewonnenen zeitlichen Verlaufs des Maßes für die Exzentrizität besser belastbare Vorhersagen möglich sind.

Wenn eine aktuelle Protokollierung der Informationen in Bezug auf die radiale Position mit einer vorangehenden Protokollierung der Informationen in Bezug auf die radiale Position im Hinblick auf eine Abweichung um mehr als einen vorgegebenen oder vorgebbaren Schwellwert verglichen wird, kann eine kritische Situation erkannt werden, zum Beispiel ein beginnender oder bereits gegebener Lagerschaden oder zu große Querkräfte, und es können automatisch Gegenmaßnahmen, wie das Abschalten des Motors oder eine Verringerung der Geschwindigkeit, oder sonstige Maßnahmen, wie zum Beispiel die Aktvierung eines optischen oder akustischen Anzeigeelements, veranlasst werden. Die Erfindung ist damit auch ein Messwertgeber zur Aufnahme einer Positionsinformation, der nach einem Verfahren wie hier und im Folgenden beschrieben arbeitet und dazu Mittel zur Durchführung des Verfahrens umfasst. Dieser Aspekt der Erfindung ist dabei bevorzugt in Software oder Firmware oder Soft- und Firmware implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung für einen Motor, für die ein solcher Messwertgeber als Sensor fungiert, in deren Speicher als Mittel zur Durchführung des Verfahrens und seiner Ausgestaltungen ein solches Computerprogramm geladen oder ladbar ist.

Insgesamt besteht ein Vorteil der Erfindung und ihrer Ausgestaltungen damit auch darin, dass der Messwertgeber mittelbar oder unmittelbar auch Informationen darüber liefert, ob an der Motorwelle ungewöhnliche oder ungewöhnlich hohe Prozesskräfte angreifen, also ob sich die Motorwelle etwa aufgrund solcher Prozesskräfte, insbesondere sogenannter Querkräfte, oder aufgrund eines zunehmenden Verschleißes von Teilen des Motors, insbesondere der zur Lagerung der Motorwelle vorgesehenen Lager, in radialer Richtung verschiebt. Bei einer solchen Verschiebung spricht man auch von einem "Schlagen" der Motorwelle. Mit bisher bekannten Messwertgebern für Motoren, die eine Motorwelle in eine Drehbewegung versetzen, sind solche Informationen nicht erhältlich. Darüber hinaus können die Informationen in Bezug auf eine radiale Position auch dafür verwendet werden, um andere von dem Messwertgeber gelieferte Positionsinformationen, etwa Informationen in Bezug auf eine Winkellage der Motorwelle, zu korrigieren, um auf diese Weise Exzentrizitätsfehler bei einer ungenügend exakten Justierung der Maßverkörperung zur Drehachse der Motorwelle auszugleichen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen Motor mit einem Messwertgeber,
- FIG 2: den in FIG 1 nur grob dargestellten Messwertgeber mit weiteren Details, nämlich unter anderem einer computergenerierte Hologramme umfassenden Maßverkörperung,
- FIG 3: und
- FIG 4: Darstellungen zur Verdeutlichung von möglichen Fehlern aufgrund einer fehlerhaften Justierung der Maßverkörperung bzw. einer Exzentrizität der Motorwelle,
- FIG 5: eine schematisch vereinfachte Darstellung zur Verdeutlichung der Abtastung computergenerierter Hologramme und des jeweils resultierenden optischen Codes,
- FIG 6: eine mehrere kreisförmige und konzentrische Spuren umfassende Maßverkörperung sowie
- FIG 7: eine Darstellung weiterer Details des Messwertgebers und spezieller Einzelheiten eines zur Steuerung des Motors vorgesehenen Steuergeräts zur Verdeutlichung einer Wechselwirkung zwischen Messwertgeber und Steuerungsgerät.

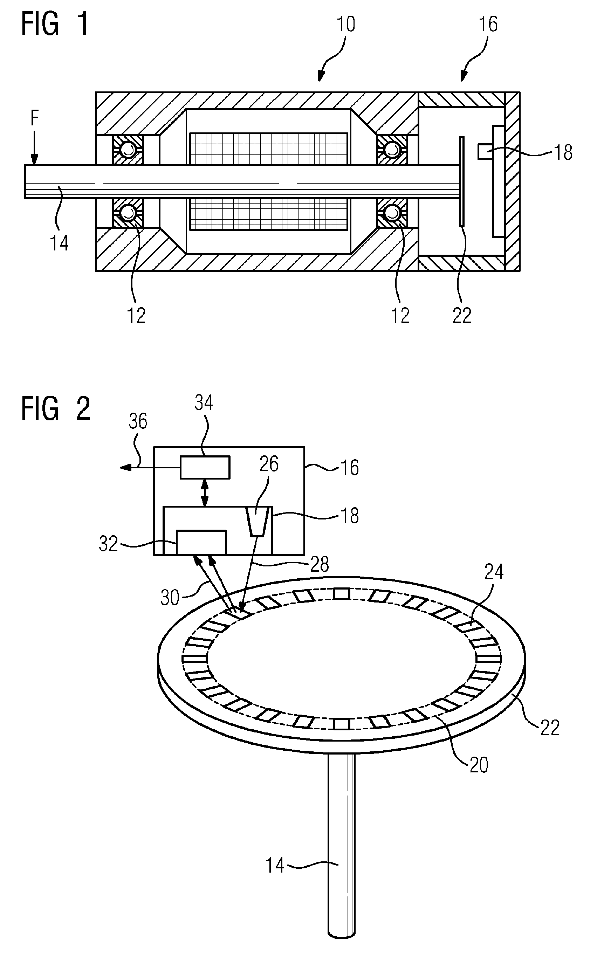

FIG 1 zeigt in einer schematisch vereinfachten Schnittdarstellung einen Motor 10 und dessen in einem oder mehreren Lagern 12 drehbar gelagerte Motorwelle 14. Dem Motor 10 ist ein Messwertgeber 16 zugeordnet. Andere übliche Bezeichnungen für einen Messwertgeber 16 sind Messwertaufnehmer oder kurz Geber.

Der in FIG 1 gezeigte Messwertgeber 16 umfasst eine als Sensor fungierende Sende- und Empfangseinheit 18, mit der eine Maßverkörperung 20 (FIG 2) auf einem mit der Motorwelle 14 bewegten Träger 22 abtastbar ist und im Betrieb des Messwertgebers 16 abgetastet wird. Wie durch den mit F bezeichneten Pfeil am freien Ende der Motorwelle 14 angedeutet, können auf die Motorwelle 14 im Betrieb des Motors 10 Querkräfte oder dergleichen wirken, die speziell die Lager 12 belasten.

FIG 2 zeigt den Messwertgeber 16 und den Träger 22, bei dem es sich normalerweise um eine drehbare Scheibe handelt, so dass die Begriffe Träger und Scheibe im Folgenden, allerdings ohne Verzicht auf eine weitergehende Allgemeingültigkeit, synonym verwendet werden, mit weiteren Details. Auf dem Träger 22 befinden sich als Maßverkörperung 20 mikrostrukturierte Felder in Form von computergenerierten Hologrammen 24. Diese werden mit dem hier und im Folgenden auch kurz nur als Messwertgeber 16 bezeichneten Messwertgeber zum Erhalt einer Positionsinformation abgetastet. Der Messwertgeber 16 umfasst zum Erhalt einer Positionsinformation die Sende-/Empfangseinheit 18. Mit dieser werden die computergenerierten Hologramme 24 abgetastet. Dazu umfasst die Sende-/Empfangseinheit 18 zumindest eine Strahlquelle 26 zum Erzeugen eines Abtaststrahls 28, also insbesondere eine Strahlquelle 26 zum Erzeugen eines Laserstrahls, nämlich eine Laserdiode. Der Abtaststrahl 28 erfährt an dem jeweils erfassten computergenerierten Hologramm 24 entweder eine Reflektion oder Transmission. Gezeigt ist eine Reflektion und entsprechend ein erster und ein zweiter reflektierter Strahl 30. Die beiden dargestellten reflektierten Strahlen 30 sollen auch als Hinweis dafür stehen, dass bei einer Reflektion oder Transmission des Abtaststrahls 28 aufgrund der in den computergenerierten Hologrammen 24 angelegten Mikrostruktur normalerweise eine Mehrzahl von Intensitätsmaxima resultiert. Die Intensitätsmaxima oder zumindest ein Intensitätsmaximum sind wie ein Binärcode auswertbar. Die Reflektion oder Transmission liefert demnach ein Bild eines in dem jeweils abgetasteten computergenerierten Hologramm 24 mikrostrukturell angelegten optischen Codes. Zur Erfassung dieses Bilds ist ein Detektor 32 mit einer Mehrzahl von optisch sensitiven Elementen in Form von oder nach Art einer CCD-Zeile oder CCD-Matrix vorgesehen. Zur Auswertung des jeweils aufgenommenen Bildes ist eine Verarbeitungseinheit 34 in Form von oder nach Art eines Mikroprozessors oder ASICs vorgesehen. Die Verarbeitungseinheit 34 kann auch integraler Bestandteil der Sende-/Empfangseinheit 18 sein. Für die jeweilige Positionsinformation generiert der Messwertgeber 16 ein durch nachgeordnete Einheiten verarbeitbares Ausgangssignal 36.

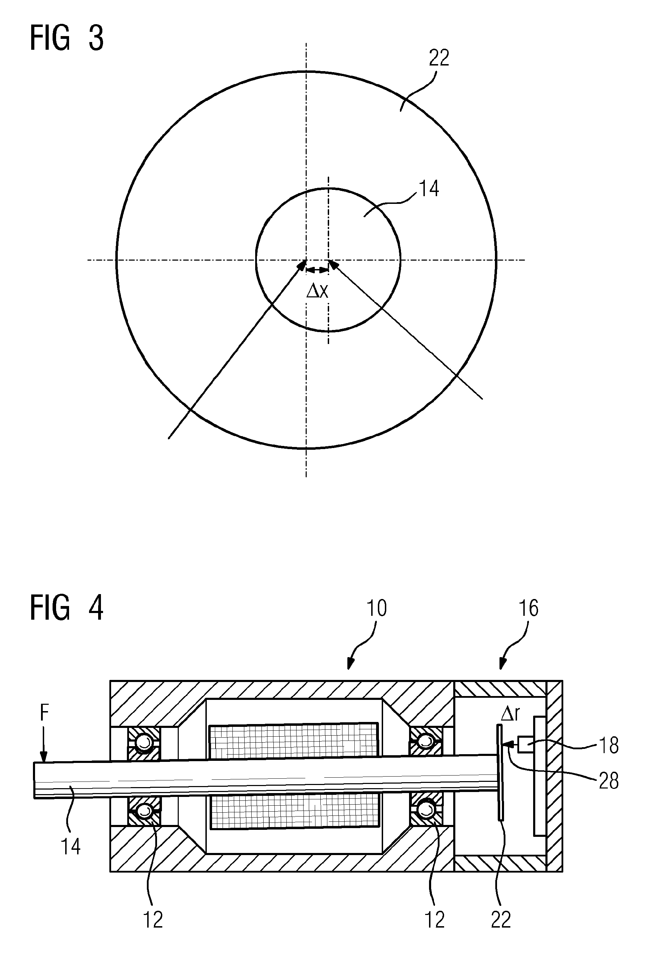

Die Darstellungen in FIG 3 und FIG 4 zeigen mögliche Fehler aufgrund einer fehlerhaften Justierung der Maßverkörperung (FIG 3) bzw. einer Exzentrizität der Motorwelle 14 (FIG 4). Der von rechte unten ausgehende Pfeil weist auf den Mittelpunkt und damit die Drehachse der Motorwelle 14. Der Träger 22 mit der hier nicht gezeigten Maßverkörperung 20 ist zur Drehachse der Motorwelle 14 ungenau positioniert, wie sich leicht anhand des mit Δx bezeichneten Abstands zwischen dem mit dem bereits benannten Pfeil bezeichneten Mittelpunkt der Motorwelle 14 und einem mit dem von links unten ausgehenden Pfeil bezeichneten Mittelpunkt der Maßverkörperung 20 ergibt. FIG 4 zeigt eine zur Verdeutlichung übertrieben groß dargestellte Schräglage der Motorwelle 14 aufgrund von auf die Motorwelle wirkenden Querkräften F. Die Schräglage der Motorwelle 14 bewirkt eine entsprechende Neigung des Trägers 22, der bei einer Drehung der Motorwelle 14 zu einer taumelnden Bewegung des Trägers 22 und damit zu einer fehlerhaften Erfassung von Informationen hinsichtlich der radialen Position - in der Darstellung in FIG 4 mit Δr bezeichnet - führt.

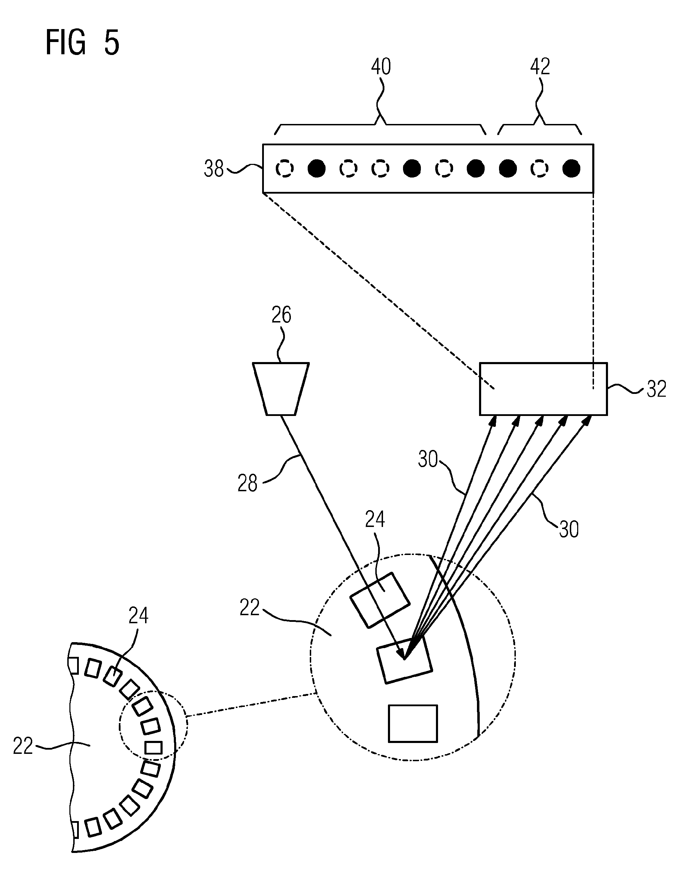

FIG 5 veranschaulich in einer schematisch vereinfachten und teilweise perspektivischen Darstellung das Prinzip der Abtastung eines als Teil einer Maßverkörperung 20 fungierenden computergenerierten Hologramms 24. Der von der Strahlquelle 26 ausgesandte Abtaststrahl 28 fällt auf jeweils ein im Erfassungsbereich des Messwertgebers 16 liegendes computergeneriertes Hologramm 24 und aufgrund der Beugung des Abtaststrahls 28 an dessen Mikrostruktur resultieren ein oder mehrere Intensitätsmaxima als Ergebnis reflektierter (oder transmittierter) Strahlen 30. Diese reflektierten Strahlen 30 werden vom Detektor 32 erfasst und dort wird ein Bild des in dem jeweils abgetasteten computergenerierten Hologramm 24 angelegten optischen Codes 38 aufgenommen. Ein Beispiel für einen solchen optischen Code 38 ist oberhalb des Detektors 32 gezeigt. Der optische Code 38 ist durch eine Verdeutlichung jeweils resultierender Intensitätsmaxima gezeigt. Ausgefüllte Kreise stehen für ein mit dem Detektor 32 aufnehmbares Intensitätsmaximum. Gestrichelte Kreise stehen für einen potentiellen Ort eines Intensitätsmaximums, an dem sich bei dem jeweiligen optischen Code 38 jedoch kein Intensitätsmaximum ergibt. Es ist leicht erkennbar und im Übrigen aus der EP 1 677 081 B bekannt, dass sich ein solcher optischer Code wie ein Binärcode auswerten lässt. Intensitätsmaxima können dabei zum Beispiel für den Wert "1" und Bereiche, auf die keine Reflektion erfolgt, für den Wert "0" stehen. In binärer Schreibweise dargestellt lautet der in FIG 5 gezeigte optische Code 38 damit "0100101101".

Bei dem hier vorgeschlagenen Messwertgeber 16 ist vorgesehen, dass die von der abgetasteten Maßverkörperung 20 umfassten computergenerierten Hologramme 24 auch Informationen in Bezug auf eine radiale Position des jeweiligen Hologramms 24 umfassen, also eine solche radiale Position kodieren. Die Art und der Umfang des jeweils mit einem computergenerierten Hologramm 24 erzeugten optischen Codes 38 ist grundsätzlich beliebig. Gleiches gilt für eine Ausrichtung und den Ort der jeweils resultierenden Intensitätsmaxima. Die linienförmige Darstellung eines resultierenden optischen Codes 38 ist demnach nur ein Beispiel und ein solcher linienförmiger optischer Code 38 kommt besonders in Betracht, wenn der Messwertgeber 16 als Detektor 32 einen zeilenförmigen Sensor umfasst. Die weitere Beschreibung wird aus Gründen der Einfachheit am Beispiel eines linienförmigen optischen Codes 38 fortgeführt. Wenn das computergenerierte Hologramm 24 auch Informationen in Bezug auf eine radiale Position des Hologramms 24 auf dem Träger 22 oder innerhalb der Maßverkörperung 20 umfasst, muss die jeweils kodierte radiale Position durch einen Teil des bei der Abtastung resultierenden optischen Codes 38 repräsentiert sein. In der Darstellung in FIG 5 ist dies durch zwei geschweifte Klammern 40, 42, die jeweils einzelne Abschnitte des optischen Codes 38 erfassen, dargestellt. Für die weitere Beschreibung soll davon ausgegangen werden, dass die erste Klammer 40 den Teil des optischen Codes 38 erfasst, der zum Beispiel eine absolute Positionsinformation, etwa eine Winkellage des Trägers 22 und damit eine Winkellage der Motorwelle 14, darstellt und dass die zweite Klammer 42 den Teil des optischen Codes 38 erfasst, der eine Information in Bezug auf eine radiale Position des jeweils abgetasteten computergenerierten Hologramms 24 darstellt. In binärer Darstellung ist die von dem in der Darstellung in FIG 5 abgetasteten computergenerierten Hologramm 24 kodierte absolute Position damit "0100101" und die radiale Position "101".

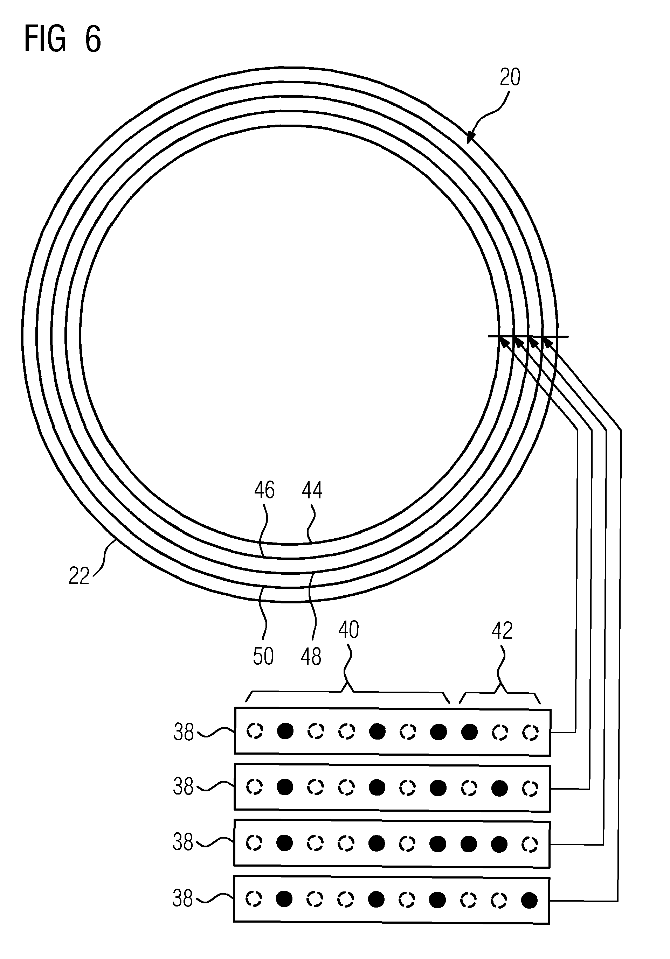

Für eine Kodierung einer radialen Position des jeweiligen computergenerierten Hologramms 24 reichen dabei normalerweise wenige Bits aus, denn bei einem rotierenden Träger 22 kann davon ausgegangen werden, dass die Abtastung der auf dem Träger 22 aufgebrachten Maßverkörperung 20 normalerweise in einem engen Bereich stattfindet. FIG 6 zeigt insoweit eine Darstellung des Trägers 22 mit dessen Maßverkörperung 20 in einer Draufsicht. Erkennbar ist, dass die Maßverkörperung 20 eine Mehrzahl von konzentrischen, kreisförmigen Spuren 44, 46, 48, 50 umfasst. Nicht gezeigt ist, dass jede Spur 44-50 eine Mehrzahl von computergenerierten Hologrammen 24 umfasst. Tatsächlich ergibt sich eine Spur 44-50 im Grunde nur als Aneinanderreihung einer Vielzahl solcher Hologramme 24. Dargestellt sind exemplarisch vier derartige Spuren 44-50. In der Praxis kann die Maßverkörperung 20 mehr oder weniger als vier Spuren 44-50 umfassen. Am Beispiel von vier Spuren 44-50 mit computergenerierten Hologrammen 24 wird deutlich, dass sich eine radiale Position mit wenigen Bits kodieren lässt. Innerhalb ein und derselben Spur 44-50 weisen alle davon umfassten computergenerierten Hologramme 24 die selbe vom normalerweise mit dem Drehpunkt zusammenfallenden Mittelpunkt der als Träger der Maßverkörperung 20 fungierenden Scheibe 22 gemessene radiale Position auf. Mit drei Bits (vergleiche die Darstellung des optischen Codes 38 in FIG 5) lassen sich damit die radialen Positionen von insgesamt acht Spuren 44-50 kodieren. Mit vier Bits ließen sich die radialen Positionen von insgesamt sechszehn Spuren 44-50 kodieren, und so weiter. Normalerweise kann dies als ausreichend angesehen werden, denn eine Justierung der Sende-/Empfangseinheit 18 des Messwertgebers 16 in Bezug auf die Maßverkörperung 20 wird bevorzugt so gewählt werden, dass der Abtaststrahl eine in der Mitte der auf der Scheibe 22 aufgebrachten Maßverkörperung 20 liegende Spur 44-50 erfasst. Deren radiale Position kann auch als "Nullpunkt" aufgefasst werden. Wenn sich im Betrieb des Motors 10 aufgrund von auf die Motorwelle 14 wirkenden Querkräften F (siehe FIG 1) oder aufgrund eines Verschleißes eines oder mehrerer Lager 12 die Position der Scheibe 22 relativ zur Sende-/Empfangseinheit 18 des Messwertgebers 16 ändert, führt dies dazu, dass der Abtaststrahl 28 auf eine andere als die zunächst erfasste Spur 44-50 fällt. Der Messwertgeber 16 liefert damit eine von der zunächst ermittelten radialen Position abweichende Positionsinformation. Dies kann als Ausnahmesituation, also zum Beispiel als Indiz für zu hohe Querkräfte F und/oder einen Lagerverschleiß, ausgewertet werden. Bei einem Verfahren zum Betrieb eines Messwertgebers 16 wie hier beschrieben wird demnach durch Abtastung der Maßverkörperung 20 zumindest die von den jeweiligen computergenerierten Hologrammen 24 umfasste Information hinsichtlich deren radialer Position auf der Scheibe 22 oder innerhalb der Maßverkörperung 20 ausgewertet.

Exemplarisch sind dazu in FIG 6 vier verschiedene optische Codes 38 dargestellt. Jeder der optischen Codes 38 gehört zu einer der vier Spuren 44-50 und ergibt sich aufgrund der Abtastung eines zu der jeweiligen Spur 44-50 gehörigen computergenerierten Hologramms 24 (in FIG 6 nicht gezeigt). Die gezeigten optischen Codes 38 weisen allesamt im Bereich der ersten Klammer 40 die selbe Information auf, also zum Beispiel eine absolute Positionsinformation, zum Beispiel eine Information zur Winkellage. Daher kann zum Beispiel angenommen werden, dass die optischen Codes 38 entlang der in FIG 6 bei etwa drei Uhr eingezeichneten horizontalen Linie aufgenommen wurden. Jede Spur 44-50 hat - wie oben erläutert - einen unterschiedlichen Abstand zum Mittelpunkt der Scheibe 22, so dass die optischen Codes 38 im Bereich der zweiten Klammer 42 unterschiedliche Informationen, nämlich die Informationen hinsichtlich der radialen Position aufweisen. Im dargestellten Beispiel sind dies binär "100", "010", "110" und "001" oder dezimal "1", "2", "3" und "4". An dieser Stelle ist der Hinweis angebracht, dass die zu messenden radialen Positionsänderungen relativ klein sind, zum Beispiel kleiner als ein Millimeter und dass die Abstände zwischen zwei benachbarten Spuren 44-50 nur einen Bruchteil des jeweiligen Radius der Scheibe 22 darstellen. Nur aus Gründen der zeichnerischen Klarheit sind die Verhältnisse anders dargestellt.

Eine solche Erfassung und/oder Auswertung der radialen Position bietet die Basis für unterschiedliche Möglichkeiten zur Überwachung des Betriebs eine Motors 10. Einige werden im Folgenden beschrieben: Zunächst kann eine beim Betrieb des Motors 10 und eine aufgrund einer Rotation der Motorachse 14 veranlassten Drehung der Scheibe 22 kontinuierlich aufgenommene Information hinsichtlich der jeweiligen radialen Position der erfassten computergenerierten Hologramme 24 aufgenommen und in Bezug auf außergewöhnliche Abweichungen überwacht werden. Normalerweise wird man erwarten, dass sich die Information hinsichtlich der radialen Position nicht oder nur geringfügig ändert. Wenn dagegen eine Änderung erfolgt, zum Beispiel eine Änderung in Bezug auf eine unmittelbar zuvor aufgenommene Information hinsichtlich der radialen Position oder eine Änderung in Bezug auf einen Mittelwert der letzten zehn, fünfzig, zweihundert, usw. Positionsinformationen, stellt dies eine Auswertung der Informationen hinsichtlich der radialen Position zur Erkennung einer eventuellen Exzentrizität der Motorwelle 14 und zur Erkennung von eventuell auf die Motorwelle 14 wirkenden Querkräften dar. Wenn die Informationen hinsichtlich der radialen Position protokolliert und gespeichert werden, sind auch eventuelle Änderungen erkennbar, die sich im Laufe eines länger andauernden Betriebs des Motors 10 ergeben. Zum Beispiel kann im Wege der Protokollierung von Informationen zur radialen Position eine Initial- oder Referenzposition erfasst werden. Dies kommt zum Beispiel im Zusammenhang mit einer Funktionsprüfung des Motors 10 am Ende von dessen Fertigung, während einer Inbetriebnahme des Motors 10 am jeweiligen Einsatzort oder nach einer Einlaufphase des Motors 10 in Betracht. Eine solcher Initial- oder Referenzwert wird dauerhaft gespeichert, so dass er für entsprechende Überwachungen, nämlich Vergleiche in Bezug auf eine Über- oder Unterschreitung des Referenzwertes um mehr als einen vorgegebenen oder vorgebbaren Schwellwert, zur Verfügung steht. Genauso können auch während des Betriebs des Motors 10 zusätzliche Referenzwerte aufgenommen und gespeichert werden, um solche Überwachungen auch auf eine Situation eines eine Last antreibenden Motors 10 beziehen zu können.

Dafür umfasst der Messwertgeber 16 die Verarbeitungseinheit 34 und einen in den Zeichnungen nicht dargestellten Speicher. In den Speicher kann ein Steuerungsprogramm geladen sein, das die Funktionalität des Messwertgebers 16 bestimmt, wenn diese nicht durch Firmware und damit die Verarbeitungseinheit 34 selbst bestimmt ist. Das von der Verarbeitungseinheit 34 generierbare Ausgangssignal 36 kann eine Vielzahl von Informationen umfassen. Zum einen ist möglich, dass in Form eines Ausgangssignals 36 die jeweils aufgenommene Information hinsichtlich der radialen Position ausgegeben wird. Zum anderen ist möglich, dass als ein erstes Ausgangssignal 36 eine solche Positionsinformation und als ein zweites Ausgangssignal 36 eine weitere Positionsinformation, zum Beispiel eine Positionsinformation zur Winkellage ausgegeben wird. Dann erfolgt die Verarbeitung der Informationen zur radialen Position durch eine in Bezug auf den Messwertgeber 16 externe Einheit, zum Beispiel ein Steuergerät 52 für den Motor 10, der den Messwertgeber 16 umfasst oder dem der Messwertgeber 16 zugeordnet ist.

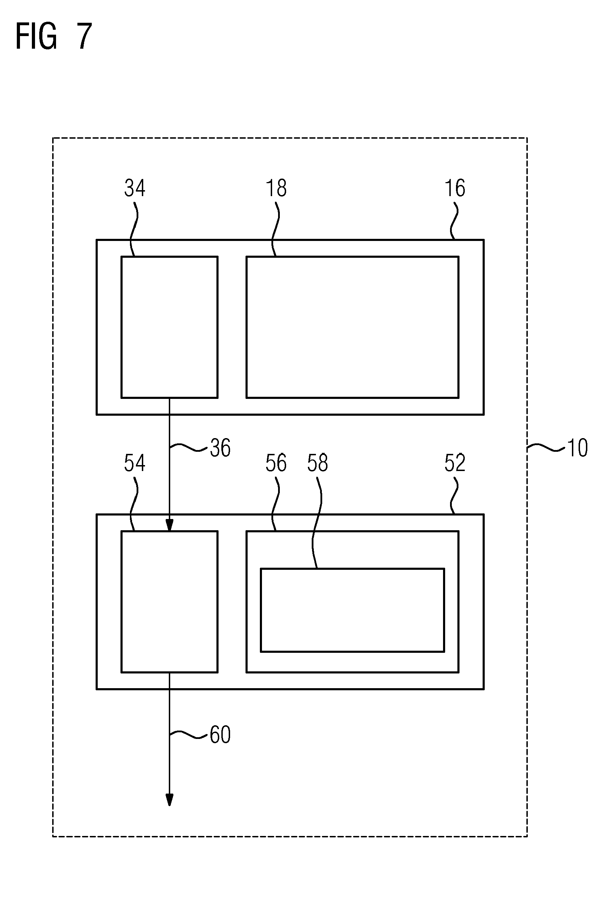

Das Steuergerät 52 ist schematisch vereinfacht in FIG 7 gezeigt und realisiert die an sich bekannten Funktionalitäten von Motorsteuerungsgeräten 52, also zum Beispiel eine Drehzahlregelung. Dafür umfasst das Steuergerät 52 eine Verarbeitungseinheit 54 in Form von oder nach Art eines Mikroprozessors oder eines ASICs und einen Speicher 56, in den ein Computerprogramm 58 geladen ist, das die Funktionalität des Steuerungsgeräts 52 bestimmt, sofern diese nicht in Form von Firmware und damit als Bestandteil der Verarbeitungseinheit 54 realisiert ist. Die weitere Beschreibung wird ohne Verzicht auf eine weitergehende Allgemeingültigkeit unter der Annahme fortgesetzt, dass die Funktionalität des Steuergeräts 52 durch ein in dessen Speicher 56 geladenes Computerprogramm 58 bestimmt ist. Dann kann das Steuergerät 52 mit dessen Verarbeitungseinheit 54 und unter Kontrolle des Computerprogramms 58 die vom Messwertgeber 16 in Form von Ausgangssignalen 36 erhaltenen Positionsinformation, nämlich speziell die Informationen hinsichtlich einer radialen Position, verarbeiten und auswerten. Schwellwertvergleiche können dann auf Seiten des Steuergeräts 52 durchgeführt werden und ein vom Steuergerät 52 anhand der Informationen hinsichtlich der radialen Position(en) generiertes Steuersignal 60 kann direkt den Motor 10 beeinflussen. Auch die bereits beschriebene Protokollierung der Informationen in Bezug auf eine radiale Position kann durch das Steuergerät 52 erfolgen und das Abspeichern solcher Daten kann im Speicher 56 des Steuergeräts 52 erfolgen. Wenn die Auswertung und Überwachung der Informationen in Bezug auf eine radiale Position durch das Steuergerät 52 erfolgt, kann das Steuergerät 52 auch selbsttätig die Protokollierung solcher Daten veranlassen, zum Beispiel eine erste Protokollierung solcher Daten anhand der Tatsache, dass im Speicher 56 noch keine diesbezüglichen Daten gespeichert sind und/oder eine weitere Protokollierung solcher Daten, wenn dem Steuergerät 52 das Erreichen eines bestimmten Betriebszustands des Motors 10 signalisiert wird, also zum Beispiel der Abschluss der Fertigung des Motors 10, der Abschluss der Inbetriebnahme des Motors 10, der Abschluss einer Einlaufphase des Motors 10, und so weiter. Grundsätzlich kann zumindest ein Teil einer Verarbeitung der Informationen in Bezug auf eine radiale Position auch zum Messwertgeber 16 ausgelagert werden. Insofern kommt zum Beispiel in Betracht, dass der Messwertgeber 16 als Ausgangssignal 36 und als Informationen in Bezug auf eine radiale Position einen Mittelwert über eine vorgegebene oder vorgebbare Anzahl solcher Positionsinformationen liefert. Des Weiteren kann vorgesehen sein, dass speziell bei einem der oben genannten speziellen Betriebszustände des Motors 10 die sich dann ergebende Information in Bezug auf eine radiale Position auf Seiten des Messwertgebers 16 als Referenzposition gespeichert wird und danach in Form des Ausgangssignals 36 und als Informationen in Bezug auf eine radiale Position nur noch Abweichungen von dieser Referenzposition ausgegeben werden. Schließlich kann auch vorgesehen sein, dass dem Messwertgeber 16 Grenz- oder Schwellwerte hinsichtlich der radialen Position vorgegeben und in dessen Speicher abgelegt werden und dass der Messwertgeber 16 in Form eines Ausgangssignals 36 Überschreitungen solcher Grenz- und Schwellwerte anzeigt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben werden ein Messwertgeber 16 zum Erhalt einer Positionsinformation und ein Verfahren zum Betrieb eines solchen Messwertgebers 16 sowie eine Verwendung eines solchen Messwertgebers 16 als Sensor eines Steuergeräts 52 für einen Motor 10, wobei mit einer Sende-/Empfangseinheit 18 des Messwertgebers 16 eine vom Messwertgeber 16 umfasste oder dem Messwertgeber 16 zugeordnete Maßverkörperung 20 abgetastet wird und wobei die Maßverkörperung 20 auf einem rotatorisch beweglichen Träger 22 aufgebrachte diffraktiv wirkende mikrostrukturierte Felder umfasst. Der Messwertgeber 16 zeichnet sich dadurch aus, dass die Maßverkörperung 20 mikrostrukturierte Felder in Form von computergenerierten Hologrammen 24 umfasst und dass die computergenerierten Hologramme 24 auch Informationen in Bezug auf eine radiale Position umfassen.

## Patentansprüche

1. Messwertgeber (16) zum Erhalt einer Positionsinformation, wobei mit einer Sende-/Empfangseinheit (18) eine Maßverkörperung (20) abtastbar ist und wobei die Maßverkörperung (20) auf einem insbesondere rotatorisch beweglichen Träger (22) aufgebrachte diffraktiv wirkende mikrostrukturierte Felder umfasst,
**dadurch gekennzeichnet, dass** die Maßverkörperung (20) mikrostrukturierte Felder in Form von computergenerierten Hologrammen (24) umfasst und dass die computergenerierten Hologramme (24) auch Informationen in Bezug auf eine radiale Position umfassen.

2. Messwertgeber (16) nach Anspruch 1, wobei jedes computergenerierte Hologramm (24) einerseits Informationen in Bezug auf eine radiale Position und andererseits zumindest eine weitere Positionsinformation umfasst.

3. Messwertgeber (16) nach Anspruch 1 oder 2, wobei die computergenerierten Hologramme (24) neben den Informationen in Bezug auf eine radiale Position auch Informationen in Bezug auf eine Winkellage umfassen.

4. Messwertgeber (16) nach Anspruch 1, 2 oder 3, wobei die Maßverkörperung (20) die computergenerierten Hologramme (24) in konzentrischen Spuren (44-50) umfasst.

5. Verfahren zum Betrieb eines Messwertgebers (16) nach einem der vorangehenden Ansprüche, wobei durch Abtastung der Maßverkörperung (20) zumindest die vom jeweiligen computergenerierten Hologramm (24) umfasste Information hinsichtlich der radialen Position ausgewertet wird.

6. Verfahren zum Betrieb eines Motors (10) mit einem Messwertgeber (16) nach einem der Ansprüche 1 bis 4, wobei der rotatorisch bewegliche Träger (22) der Maßverkörperung (20) mit einer Welle (14) der Motors (10) bewegt wird, wobei durch Abtastung der Maßverkörperung (20) zumindest die vom jeweiligen computergenerierten Hologramm (24) umfasste Information hinsichtlich der radialen Position ausgewertet wird und wobei die erhaltenen Informationen in Bezug auf die radiale Position zur Erkennung einer Exzentrizität der Motorwelle (14) und/oder zur Erkennung von auf die Motorwelle (14) wirkenden Querkräften ausgewertet werden.

7. Verfahren nach Anspruch 6, wobei die erhaltenen Informationen in Bezug auf die radiale Position zur Erkennung einer Exzentrizität der Motorwelle (14) und/oder zur Erkennung von auf die Motorwelle (14) wirkenden Querkräften ausgewertet und protokolliert werden.

8. Verfahren nach Anspruch 7, wobei eine aktuelle Protokollierung der Informationen in Bezug auf die radiale Position mit einer vorangehenden Protokollierung der Informationen in Bezug auf die radiale Position verglichen wird.

9. Verfahren nach Anspruch 8, wobei eine aktuelle Protokollierung der Informationen in Bezug auf die radiale Position mit einer vorangehenden Protokollierung der Informationen in Bezug auf die radiale Position im Hinblick auf eine Abweichung um mehr als einen vorgegebenen oder vorgebbaren Schwellwert verglichen wird.

10. Computerprogramm mit Programmcode-Mitteln, um alle Schritte von jedem beliebigen der Ansprüche 6 bis 9 durchzuführen, wenn das Computerprogramm auf einem Steuergerät (52) für einen Motor (10) ausgeführt wird.

11. Steuergerät (52) für einen Motor (10) mit einer Verarbeitungseinheit (54) und einem Speicher (56), in den ein Computerprogramm (58) nach Anspruch 10 geladen ist, das im Betrieb des Steuergeräts (52) durch dessen Verarbeitungseinheit (54) ausgeführt wird.
